Europäisches Patentamt

European Patent Office

Office européen des brevets

(11) Veröffentlichungsnummer: **0 013 359**
**B1**

(12) EUROPÄISCHE PATENTSCHRIFT

(45) Veröffentlichungstag der Patentschrift:
12.08.81

(51) Int. Cl.³: **H 05 K 3/34**

(21) Anmeldenummer: 79105039.6

(22) Anmeldetag: **10.12.79**

(54) Vorrichtung zum Aufbringen einer Lötmittelschicht auf eine Leiterplatte.

(30) Priorität: 28.12.78 DE 2856460

(43) Veröffentlichungstag der Anmeldung:
23.07.80 Patentblatt 80/15

(45) Bekanntmachung des Hinweises auf die Patenterteilung:
12.08.81 Patentblatt 81/32

(84) Benannte Vertragsstaaten:
AT BE CH FR GB IT NL SE

(73) Patentinhaber: Gebr. Schmid GmbH & Co.,
Robert-Bosch-Strasse 34, D-7290 Freudenstadt (DE)

(72) Erfinder: Schmid, Dieter, Am Schäferstich 19,
D-7290 Freudenstadt (DE)

(74) Vertreter: Hoeger, Stellrecht & Partner,
Uhlandstrasse 14c, D-7000 Stuttgart-1 (DE)

(56) Entgegenhaltungen:
CH-A-558 999
CH-A5-602 251
DD-A-127 076
DE-A1-2 619 342
DE-B-2 314 568
GB-A-1 422 844
US-A-3 593 677
US-A-3 924 794
US-A-4 011 980

## Vorrichtung zum Aufbringen einer Lötmittelschicht auf eine Leiterplatte

Die Erfindung betrifft eine Vorrichtung zum Aufbringen einer metallischen Lötmittelschicht auf eine Leiterplatte durch Kontakt der Leiterplatte mit dem flüssigen Lötmittel, mit einem ersten Behälter zur Aufnahme des flüssigen Lötmittels, einem zweiten Behälter, der in einer Wand eine horizontal verlaufende, schlitzförmige Öffnung aufweist, und mit einer Pumpe, die das flüssige Lötmittel in solcher Menge aus dem ersten Behälter in den zweiten Behälter pumpt, daß das Lötmittelniveau im zweiten Behälter oberhalb der Öffnungen liegt. Eine derartige Vorrichtung ist aus der US-Patentschrift 4 011 980 bekannt.

Bei gedruckten Leiterplatten ist es erwünscht, auf die metallischen Leiterbahnen eine durchgehende, elektrisch leitende Lötmittelschicht aufzubringen, die alle Leiterbahnen schützend abdeckt, ohne dabei elektrische Verbindungen zwischen benachbarten Leiterbahnen zu bilden. Außerdem soll die Lötmittelschicht die Innenwand von Bohrungen bedecken, ohne die Bohrungen selbst zu verstopfen.

Bei den teilweise geringen Abmessungen und bei der Vielzahl von Leiterbahnen und Bohrungen auf modernen Leiterplatten ist es außerordentlich aufwendig, eine Lötmittelschicht auf den Leiterplatten aufzubringen, die diese Anforderungen erfüllt.

Es sind Verfahren bekannt, bei denen eine elektrochemisch (galvanisch) beschichtete Blei-Zinn-Oberfläche mit heißem Öl oder mit Infrarotstrahlung aufgeschmolzen wird. Nachteilig ist dabei, daß zwei getrennte Verfahrensschritte notwendig sind und daß die Zusammensetzung der galvanisch aufgebrachten Lötmittelschicht nur schwer konstant gehalten werden kann.

Bei einem weiteren bekannten Verfahren werden die Leiterbahnen mit einem eutektischen Blei-Zinn-Lot beschichtet, indem man die Leiterplatte senkrecht stehend in eine Blei-Zinn-Schmelze mit eutektischer Zusammensetzung eintaucht. Um anschließend Verbindungen zwischen benachbarten Leiterbahnen durch auf der Leiterplatte haftendes Lötmittel und Verstopfungen der Bohrungen zu vermeiden, wird in einem nachfolgenden Schritt von beiden Seitenflächen ein scharfer Strahl heißer Luft gegen die Leiterplatten geblasen, der überschüssiges Lötmittel von der Leiterplatte und aus den Bohrungen entfernt. Dadurch bleibt die Lötmittelschicht nur an den Stellen erhalten, an denen sich eine metallische Leiterbahn bzw. eine durchkontaktierte Bohrung befindet. Diesen Vorgang bezeichnet man als Einebnen.

Das zuletzt beschriebene Verfahren ermöglicht zwar die Herstellung befriedigend beschichteter Leiterplatten, jedoch ist dieses Verfahren relativ aufwendig und eignet sich wenig für eine vollautomatische Aufbringung der Lötmittelschicht. Normalerweise werden Leiterplatten bei der vollautomatischen Bearbeitung horizontal, also liegend von einer Bearbeitungsstation in die nächste vorgeschoben. Um die Leiterplatte senkrecht in das Lötmittelbad einzutauchen, muß daher eine Schwenkung der Leiterplatte vorgenommen werden. Auch anschließend an das Eintauchen und Einebnen ist es notwendig, die Leiterplatte in horizontaler Lage abkühlen zu lassen, damit das noch flüssige Lötmittel nicht unter dem Einfluß der Schwerkraft an das untere Ende der Leiterplatte fließt.

Da das Verschwenken der Leiterplatten konstruktiv sehr aufwendig ist, hat man diesen Vorgang in der Praxis weitgehend manuell durchgeführt und damit natürlich die automatische Fertigung der Leiterplatten unterbrochen. Nachteilig ist bei diesem Verfahren auch, daß zum Einebnen große Mengen heißer Luft zur Verfügung gestellt werden müssen, wodurch der Energieverbrauch dieses Verfahrens sehr hoch wird.

Es ist Aufgabe der Erfindung, eine Vorrichtung zum Aufbringen einer Lötmittelschicht durch Kontakt der Leiterplatte mit einem flüssigen Lötmittel derart zu verbessern, daß die Leiterplatte bei der eigentlichen Beschichtung mit dem Lötmittel in liegender, horizontaler Position verbleiben kann.

Diese Aufgabe wird bei einer Vorrichtung der eingangs beschriebenen Art erfindungsgemäß dadurch gelöst, daß in der Wand gegenüber derjenigen mit der schlitzförmigen Öffnung eine weitere horizontal verlaufende schlitzförmige Öffnung vorgesehen ist und daß beide schlitzförmigen Öffnungen in der Vorschubebene der horizontal vorgeschobenen Leiterplatten liegen.

Vorteilhaft ist es, wenn der zweite Behälter oberhalb des ersten Behälters angeordnet ist, so daß aus dem zweiten Behälter ausfließendes Lötmittel im ersten Behälter gesammelt wird.

Bei einer bevorzugten Ausführungsform der Erfindung ist vorgesehen, daß auf der Ober- und auf der Unterseite der schlitzförmigen Öffnungen je ein Abstreifelement angeordnet ist.

Vorzugsweise ist das obere Abstreifelement in senkrechter Richtung derart verschieblich gelagert, daß es bei in die Öffnung eingeschobener Leiterplatte auf dieser aufliegt und bei fehlender Leiterplatte auf dem unteren Abstreifelement, so daß die Öffnung im wesentlichen verschlossen ist.

Die Abstreifelemente können gemäß einer bevorzugten Ausführungsform der Erfindung Walzen sein. Dabei ist es günstig, wenn mindestens eine der Walzen jedes Walzenpaares angetrieben ist.

Insbesondere wird vorgeschlagen, daß die Abstreifelemente derart angeordnet sind, daß sie einen Teil der Seitenwand bilden und die schlitzförmige Öffnung zwischen sich ausbilden.

Weitere vorteilhafte Ausgestaltungen der Erfindung sind Gegenstand der Unteransprüche.

Die nachfolgende Beschreibung bevorzugter Ausführungsformen der Erfindung dient im Zusammenhang mit der Zeichnung der näheren Erläuterung. Es zeigen:

Fig. 1 eine schematische Darstellung eines Teiles einer automatischen Fertigungsstraße zur Herstellung von lötmittelbeschichteten Leiterplatten;

Fig. 2 eine Längsschnittansicht einer Lötmittelbeschichtungsstation gemäß der Erfindung und

Fig. 3 eine Querschnittansicht der in Fig. 2 dargestellten Lötmittelbeschichtungsstation.

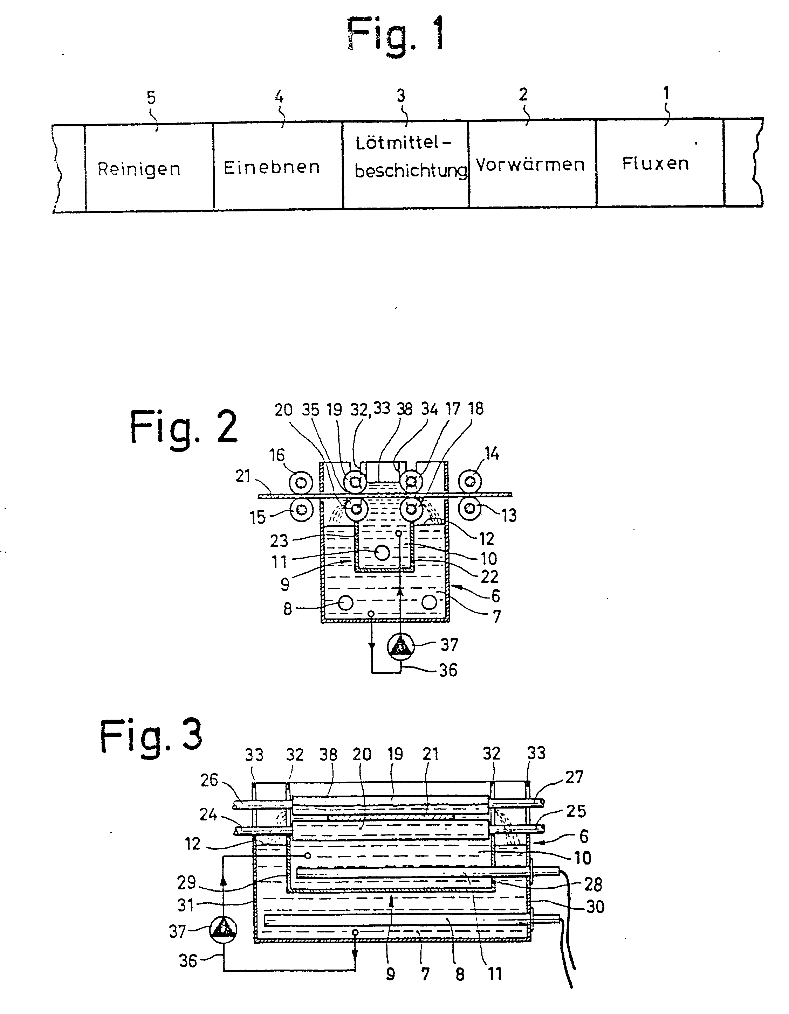

In Fig. 1 sind schematisch einige Stationen dargestellt, die Leiterplatten bei ihrer Herstellung durchlaufen. Nach der in der Darstellung nicht gezeigten Ausbildung der Leiterbahnen selbst, die beispielsweise aus Kupfer bestehen, werden die Leiterplatten nach einer Reinigung in einer Fluxstation 1 mit einem Flußmittel behandelt, diesen Vorgang bezeichnet man als »Fluxen«. Anschließend werden die mit dem Flußmittel behandelten Leiterplatten in einer Vorwärmstation 2 auf eine erhöhte Temperatur gebracht, mit welcher sie in eine Lötmittelbeschichtungsstation 3 einlaufen, in welcher sie in weiter unten ausführlich erläuterter Weise mit einem Lötmittel beschichtet werden. In einer Einebnungsstation 4 wird überschüssiges Lötmittel von den Leiterplatten entfernt, um unerwünschte Verbindungen zwischen den Leiterbahnen sowie verstopfte Bohrungen zu vermeiden und gleichzeitig der Leiterplatte ein gutes Aussehen zu verleihen. An die Einebnungsstation schließt sich eine Reinigungsstation 5 an, die von weiteren Stationen zum Spülen und Trocknen der Leiterplatten gefolgt sein kann. Zwischen der Einebnungsstation 4 und der Reinigungsstation 5 befindet sich noch eine in der Zeichnung nicht dargestellte Abkühlstrecke, innerhalb welcher die Lötmittelschicht erstarrt und abkühlt.

In Fig. 2 ist — ebenfalls schematisch — dargestellt, wie eine bevorzugte Lötmittelbeschichtungsstation 3 aufgebaut ist. In einem äußeren Behälter 6 befindet sich aufgeschmolzenes Lötmittel 7, beispielsweise eine eutektische Mischung von Blei und Zinn. Durch eine Heizung 8 wird das Lötmittel auf einer Temperatur oberhalb des Schmelzpunktes gehalten.

In dem äußeren Behälter 6 befindet sich ein weiterer Behälter 9, der ebenfalls mit flüssigem Lötmittel 10 gefüllt ist, welches mittels einer Heizung 11 auf der notwendigen Temperatur gehalten wird. Der Behälter 9 kann — wie in den Figuren 2 und 3 gezeigt — in das Lötmittel 7 eintauchen, er kann sich auch oberhalb des Lötmittelniveaus 12 im Behälter 6 befinden, wobei die Anordnung der Figuren 2 und 3 aus thermischen Gründen und aus Gründen einer niedrigeren Bauhöhe vorteilhaft ist.

Am Maschinengestell gelagerte, paarweise angeordnete Walzen 13 bis 20 dienen als Vorschubstrecke für die mit dem Lötmittel zu beschichtenden Leiterplatten 21. Vorzugsweise ist jeweils mindestens eine Walze jedes Walzenpaares angetrieben.

Die Walzen 17, 18, 19 und 20 sind derart gelagert, daß sich ihre Achsen in der Verlängerung der Vorderwand 22 bzw. der Rückwand 23 des Behälters 9 befinden. Die unteren Walzen 18 und 20 laufen dabei dicht an der oberen Kante des Behälters 6 und sind mittels Wellenstücken 24, 25 in nicht dargestellter Weise drehbar am Maschinengestell gelagert. In ähnlicher Weise sind die oberen Walzen 17 und 19 mittels Wellenstücken 26 und 27 am Maschinengestell drehbar gelagert, jedoch sind diese oberen Walzen zusätzlich in senkrechter Richtung verschieblich, so daß der gegenseitige Abstand der Walzen 17 und 18 sowie der Walzen 19 und 20 veränderbar ist. Die Seitenwände 28 und 29 des inneren Behälters 9 sowie die Seitenwände 30 und 31 des äußeren Behälters 6 weisen entsprechende schlitzförmige Ausnehmungen 32 bzw. 33 auf, durch welche die Wellenstücke 24 und 27 hindurchtreten.

In mindestens einer der Seitenwände 28, 29 des inneren Behälters 9 befindet sich im Bereich zwischen den Walzenausnehmungen 32 eine weitere Ausnehmung 34, die einen Überlauf für den inneren Behälter 9 bildet. Der untere Rand dieser Ausnehmung 34 befindet sich oberhalb der schlitzförmigen Öffnungen 35, die die Walzen 17 und 18 bzw. 19 und 20 zwischen sich ausbilden, vorzugsweise auf der Höhe der Wellenstücke 26 und 27 der oberen Walzen 17 und 19.

Der Behälter 6 ist über eine Pumpleitung 36, in die eine Pumpe 37 eingeschaltet ist, mit dem Behälter 9 verbunden.

Zum Beschichten einer Leiterplatte 21 mit flüssigem Lötmittel wird die Leiterplatte 21 mittels der Walzen 13 bis 20 horizontal vorgeschoben. Solange die Vorderkante der Leiterplatte 21 sich noch nicht zwischen den Walzen 17 und 18 befindet, liegen die in senkrechter Richtung verschieblichen oberen Walzen 17 und 19 unter dem Einfluß der Schwerkraft an den ihnen gegenüberliegenden unteren Walzen 18 bzw. 20 an und verschließen so die schlitzförmigen Öffnungen 35. In diesem Zustand ist der Behälter 9 im Bereich der Seitenwände bis zur Höhe der Unterkante der Ausnehmung 34 weitgehend abgedichtet.

Mittels der Pumpe 37 wird laufend Lötmittel aus dem Behälter 6 in den Behälter 9 gepumpt, so daß sich im Behälter 9 ein durch die Ausnehmung 34 definierter Lötmittelspiegel 38 einstellt. Verluste, die dadurch entstehen, daß das Lötmittel im Bereich der Vorderwand und der Rückwand unterhalb der Walzen 18 und 20 und seitlich der Walzen 17 bis 20 sowie im Bereich der Seitenwände an den Ausnehmungen 32 aus dem Behälter 9 ausfließt, werden durch eine entsprechend hohe Leistung der Pumpe 37 ausgeglichen.

Beim Vorschieben der Leiterplatte 21 tritt diese mit ihrem vorderen Rand in die schlitzförmige Öffnung 37 zwischen den Walzen 17 und 18 ein und verschiebt dabei die obere Walze 17 entgegen der Schwerkraft nach oben, so daß die Walzen 17 und 18 auf der Vorder- und auf der Rückseite der Leiterplatte 21 abrollen. In gleicher Weise erfolgt eine Trennung der Walzen 19 und 20 beim weiteren Vorschieben der Leiterplatte. Auf diese Weise wird die gesamte Leiterplatte durch den Behälter 9 hindurch geschoben, wobei sich die Leiterplatte immer unterhalb des Lötmittelspiegels 38 befindet. Es wird dadurch gewährleistet, daß die Leistung der Pumpe 37 hoch genug gewählt wird, um alle Lötmittelverluste des Behälters 9 zu kompensieren, auch die Verluste, die sich aufgrund des echten Lötmittelverbrauches beim Beschichten der Leiterplatte ergeben.

Insbesondere die Walzen am Austrittsende des Behälters 9 wirken gleichzeitig als Abstreifelemente, die überschüssiges Lötmittel von den Leiterplatten abstreifen und im Behälter 9 zurückhalten. Gegebenenfalls ist es möglich, die oberen Walzen 17 und 19 nach unten vorzuspannen, beispielsweise mittels Federn oder Zusatzgewichten, so daß die Auflagekraft und damit die Abstreifwirkung dieser oberen Walzen erhöht werden.

Das aus dem Behälter 9 ausströmende Lötmittel wird im Behälter 6 aufgefangen, so daß sich ein Lötmittelkreislauf ergibt.

Dadurch, daß trotz der Schließwirkung der Walzen 17 und 18 bzw. 19 und 20 stets eine geringe Lötmittelmenge aus den schlitzförmigen Öffnungen 35 ausfließt, wird gewährleistet, daß die Leiterplatte beim Durchgang durch den Behälter 9 immer mit frischem, nicht oxidiertem Lötmittel in Berührung kommt. Ebenso kann die Ausbildung einer solchen Schicht an der Oberfläche des Lötmittels im Behälter 9 dadurch vermieden werden, daß ständig Lötmittel über den von der Ausnehmung 34 gebildeten Überlauf strömt.

Die vorstehend beschriebene Vorrichtung ist besonders vorteilhaft im Betrieb, da die schlitzförmigen Öffnungen 35 durch diese Öffnungen automatisch verschließende, gleichzeitig als Abstreifelemente und als Teil der Vorschubstrecke wirkende Walzen gebildet werden. Bei anderen, in der Zeichnung nicht dargestellten Ausführungsformen, könnten statt der Walzen 17, 18, 19 und 20 auch feststehende Abstreifelemente verwendet werden. Weiterhin wäre es möglich, auf diese Elemente ganz zu verzichten und in der Vorder- und in der Rückwand des Behälters 9 lediglich je einen horizontalen Schlitz vorzusehen. Da dann die Lötmittelverluste bei fehlender Leiterplatte höher wären, müßte die Pumpleistung entsprechend gesteigert werden, damit der Lötmittelspiegel 38 im Behälter 9 in jedem Falle oberhalb der schlitzförmigen Öffnung 35 steht.

Abstreifelemente, insbesondere Walzenpaare, können auch in Vorschubrichtung der Leiterplatten gesehen unmittelbar vor oder unmittelbar hinter den schlitzförmigen Öffnungen 35 angeordnet werden, so daß sie nur die Abstreif- und evtl. Vorschubaufgabe übernehmen, nicht jedoch die Aufgabe der Bildung der schlitzförmigen Öffnungen 35, die in diesem Falle in der Vorder- oder Rückwand selbst anzuordnen wären.

Die Verwendung von Abstreifelementen ist vor allen Dingen auch deshalb vorteilhaft, weil dadurch der anschließende Einebnungsvorgang erheblich erleichtert wird. Die Abstreifelemente entfernen von den aus dem Behälter 9 austretenden Leiterplatten einen großen Teil des überschüssigen Lötmittels, wobei diese Entfernung gleichmäßig über die gesamte Fläche erfolgt. Das anschließende Einebnen wird vorteilhaft dadurch erreicht, daß man ein heißes Öl gegen die beschichtete Leiterplatte spritzt. Man erreicht dadurch nicht nur eine Säuberung der Leiterbahnen selbst, sondern auch eine Reinigung der Bohrungen von überschüssigem Lötmittel.

Bei der beschriebenen Vorrichtung können die Leiterplatten durch die gesamte Vorrichtung in horizontaler Lage kontinuierlich hindurchgeführt werden, ohne daß zum Beschichten mit dem flüssigen Lötmittel eine Schwenkung oder eine andere Lageveränderung notwendig ist. Dadurch kann der gesamte Vorgang vollständig automatisiert und dadurch erheblich vereinfacht oder beschleunigt werden, wobei sich ausgezeichnete und vollständig reproduzierbare Beschichtungsergebnisse erzielen lassen.

**Patentansprüche**

1. Vorrichtung zum Aufbringen einer metallischen Lötmittelschicht auf eine Leiterplatte durch Kontakt der Leiterplatte mit dem flüssigen Lötmittel, mit einem ersten Behälter (6) zur Aufnahme des flüssigen Lötmittels (7), einem zweiten Behälter (9), der in einer Wand (22, 23) eine horizontal verlaufende, schlitzförmige Öffnung (35) aufweist, und mit einer Pumpe (37), die das flüssige Lötmittel in solcher Menge aus dem ersten Behälter (6) in den zweiten Behälter (9) pumpt, daß das Lötmittelniveau (38) im zweiten Behälter (9) oberhalb der Öffnungen (35) liegt, dadurch gekennzeichnet, daß in der Wand (23) gegenüber derjenigen (22) mit der schlitzförmigen Öffnung (35) eine weitere horizontal verlaufende schlitzförmige Öffnung (35) vorgesehen ist und daß beide schlitzförmigen Öffnungen (35) in der Vorschubebene der horizontal vorgeschobenen Leiterplatten (21) liegen.

2. Vorrichtung nach Anspruch 1, dadurch gekennzeichnet, daß der zweite Behälter (9) oberhalb des ersten Behälters (6) angeordnet ist, so daß aus dem zweiten Behälter (9) ausfließendes Lötmittel im ersten Behälter (6) gesammelt wird.

3. Vorrichtung nach einem der Ansprüche 1 oder 2, dadurch gekennzeichnet, daß der zweite Behälter (9) einen Überlauf (34) aufweist.

4. Vorrichtung nach Anspruch 3, dadurch gekennzeichnet, daß der Überlauf (34) an denjenigen Seitenwänden (28, 29) angeordnet ist, die die schlitzförmige Öffnung (35) aufweisende Vorder- und Rückwand (22 bzw. 23) miteinander verbinden.

5. Vorrichtung nach einem der voranstehenden Ansprüche, dadurch gekennzeichnet, daß auf der Ober- und auf der Unterseite der schlitzförmigen Öffnungen (35) je ein Abstreifelement (17, 18, 19, 20) angeordnet ist.

6. Vorrichtung nach Anspruch 5, dadurch gekennzeichnet, daß das obere Abstreifelement (17, 19) in senkrechter Richtung derart verschieblich gelagert ist, daß es bei in die Öffnungen (35) eingeschobener Leiterplatte (21) auf dieser aufliegt und bei fehlender Leiterplatte auf dem unteren Abstreifelement (18, 20), so daß die Öffnung (35) im wesentlichen verschlossen ist.

7. Vorrichtung nach einem der Ansprüche 5 oder 6, dadurch gekennzeichnet, daß die Abstreifelemente Walzen (17, 18, 19, 20) sind.

8. Vorrichtung nach Anspruch 7, dadurch gekennzeichnet, daß mindestens eine der Walzen (17, 18, 19, 20) jedes Walzenpaares angetrieben ist.

9. Vorrichtung nach einem der Ansprüche 5 bis 8, dadurch gekennzeichnet, daß die Abstreifelemente (17, 18, 19, 20) derart angeordnet sind, daß sie einen Teil der Vorder- bzw. Rückwand (22, 23) bilden und die schlitzförmige Öffnung (35) zwischen sich ausbilden.

10. Vorrichtung nach einem der voranstehenden Ansprüche, dadurch gekennzeichnet, daß zumindest im ersten Behälter (6) eine Heizung (8) angeordnet ist.

## Claims

1. Apparatus for applying a metallic solder coating on a printed circuit board through contact of the printed circuit board with the liquid solder, having a first container (6) for receiving the liquid solder (7), a second container (9) which has a slot-shaped opening (35) extending horizontally in one wall (22, 23), an a pump (37) which pumps the liquid solder from the first container (6) into the second container (9) in a quantity such that the level (38) of solder in the second container (9) is above the openings (35), characterized in that a further slot-shaped opening (35) extending horizontally is provided in the wall (23) opposite the wall (22) with the slot-shaped opening (35) and both slot-shaped openings (35) are located in the feed plane of the printed circuit boards (21) fed horizontally.

2. An apparatus according to Claim 1, characterized in that the second container (9) is situated above the first container (6) so that solder flowing out of the second container (9) is collected in the first container (6).

3. An apparatus according to one of Claims 1 or 2, characterized in that the second container (9) has an overflow (34).

4. An apparatus according to Claim 3, characterized in that the overflow (34) is disposed on those side walls (28, 29) joining the front and rear walls (22 and 23 respectively) with the slot-shaped opening (35).

5. An apparatus according to any one of the preceding Claims, characterized in that a wiper element (17, 18, 19, 20) is disposed in each case on the upper side and underside of the slot-shaped openings (35).

6. An apparatus according to Claim 5, characterized in that the upper wiper element (17, 19) is mounted so as to be vertically displaceable in such a way that when a printed circuit board (21) is inserted in the openings (35) it rests on the said printed circuit board (21) and in the absence of a printed circuit board it rests on the lower wiper element (18, 20) so that the opening (35) is essentially closed.

7. An apparatus according to one of Claims 5 or 6, chracterized in that the wiper elements are rollers (17, 18, 19, 20).

8. An apparatus according to Claim 7, characterized in that a least one of the rollers (17, 18, 19, 20) of each pair of rollers is driven.

9. An apparatus according to any one of Claims 5 to 8, characterized in that the wiper elements (17, 18, 19, 20) are arranged in such a way that they form part of the front and rear walls (22, 23) respectively and form the slot-shaped opening (35) between themselves.

10. An apparatus according to any one of the preceding Claims, characterized in that a heating means (8) is disposed at least in the first container (6).

## Revendications

1. Dispositif permettant de rapporter une couche de brasure métallique sur une carte de circuit imprimé par contact de la carte avec la brasure liquide, dispositif comportant un premier récipient (6) qui reçoit la brasure liquide (7), un deuxième récipient (9) qui présente dans une paroi (22, 23) une ouverture en forme de fente (35) qui court horizontalement, comportant également une pompe (37) qui pompe la brasure liquide pour la faire passer du premier récipient (6) dans le deuxième récipient (9) à un débit tel que le niveau de la brasure (38) dans le deuxième récipient (9) se tient au-dessus des ouvertures (35), caractérisé en ce que dans la paroi (23) située en face de celle qui présente l'ouverture en forme de fente (35), est prévue une autre ouverture (35) en forme de fente et qui court horizontalement; et en ce que les deux ouvertures (35) en forme de fente sont situées dans le plan d'avancement des cartes (21) qui avancent horizontalement.

2. Dispositiv selon la revendication 1, caractérisé en ce que le deuxième récipient (9) est disposé au-dessus du premier récipient (6) de sorte que la brasure qui s'écoule hors du deuxième récipient (9) se rassemble dans le premier récipient (6).

3. Dispositif selon l'une des revendications 1 ou 2, caractérisé en ce que le deuxième récipient (9) présente un trop plein (34).

4. Dispositif selon la revendication 3, caractérisé en ce que le trop plein (34) est disposé sur les parois latérales (28, 29) qui relient l'une à l'autre les parois avant et arrière (22 et 23) qui présentent l'ouverture en forme de fente (35).

5. Dispositif selon l'une des revendications précédentes, caractérisé en ce que sur le côté supérieur et sur le côté inférieur des ouvertures (35) en forme de fente est respectivement disposé un élément racleur (17, 18, 19, 20).

6. Dispositif selon la revendication 5, caractérisé en ce que l'élément racleur supérieur (17, 19) a une portée qui peut coulisser en direction verticale de façon telle que, s'il y a une carte (21) introduite dans les ouvertures (35), il repose sur cette carte et, s'il n'y a pas de carte, il repose sur l'élément racleur inférieur (18, 20), de sorte que l'ouverture (35) est essentiellement fermée.

7. Dispositif selon l'une des revendication 5 ou 6, caractérisé en ce que les éléments racleurs sont des rouleaux (17, 18, 19, 20).

8. Dispositif selon la revendication 7, caractérisé en ce qu'au moins un des rouleaux (17, 18, 19, 20) de chaque paire de rouleaux est entraînée.

9. Dispositif selon l'une des revendications 5à 8, caractérisé en ce que les éléments racleurs (17, 18, 19, 20) sont disposés de façon à constituer une partie de la paroi avant ou de la paroi arrière (22, 23) et à former entre eux l'ouverture en forme de fente (35).

10. Dispositif selon l'une des revendications précédentes, caractérisé en ce qu'au moins dans un récipient (6) est disposé un élément chauffant (8).

# Fig. 1

| Reinigen | Einebnen | Lötmittel-beschichtung | Vorwärmen | Fluxen |
|----------|----------|------------------------|-----------|--------|

5     4     3     2     1

# Fig. 2

# Fig. 3